(19) Europäisches Patentamt
European Patent Office
Office européen des brevets

(11) **EP 3 184 326 A1**

(12) **EUROPEAN PATENT APPLICATION**

(43) Date of publication:
**28.06.2017 Bulletin 2017/26**

(51) Int Cl.:
**B60C 7/00** (2006.01)      **B60C 7/14** (2006.01)
**B60C 7/26** (2006.01)

(21) Application number: **16203400.3**

(22) Date of filing: **12.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.12.2015 US 201562270177 P**

(71) Applicant: **The Goodyear Tire & Rubber Company
Akron, Ohio 44316 (US)**

(72) Inventor: **DOWNING, Daniel Ray
Uniontown, OH 44685 (US)**

(74) Representative: **Kutsch, Bernd
Goodyear S.A.
Patent Department
Avenue Gordon Smith
7750 Colmar-Berg (LU)**

(54) **NON-PNEUMATIC TIRE**

(57)      A structurally supported non-pneumatic tire comprising a ground contacting annular tread (200), a shear band (300) and a reinforcement layer (400) positioned radially inward of the tread (200) wherein the reinforcement layer (400) extends radially inward forming sidewalls and is formed of a strip of material wound in a geodesic pattern.

FIG. 3

EP 3 184 326 A1

**Description**

Field of the Invention

The present invention relates generally to vehicle tires and non-pneumatic tires, and more particularly, to a non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus an improved non pneumatic tire is desired that has all the features of the pneumatic tires without the drawback of the need for air inflation is desired.

Summary of the Invention

The invention relates to a tire in accordance with claim 1.

Dependent claims refer to preferred embodiments of the invention.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the angle β of the strip with respect to itself is strictly greater than 90 degrees.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the strip is continuously wound.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the angle β of the strip with respect to itself is substantially 180 degrees throughout the layer of ply.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the angle β of the strip is a constant throughout the reinforcement layer.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the angle β of the ply with respect to itself is 180 degrees or less throughout the reinforcement layer.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the strip is tangent to a point located at the radially innermost point of each sidewall.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the non-pneumatic tire has no annular bead.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the non-pneumatic tire is mounted on a rim, wherein the rim is axially adjustable.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the reinforcement layer makes an angle alpha with the radial direction so that the sidewalls are angled.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the angle β of the strip with respect to itself is substantially 180 degrees throughout the layer of ply, and wherein the angle alpha is in the range of -20 to +20 degrees.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein a radially inner end of the reinforcement layer is secured to a rim.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the reinforcement layer is positioned radially inward of the shear band.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein the reinforcement layer is positioned radially outward of the shear band.

One or more embodiments of the present invention provide a structurally supported non-pneumatic tire comprising a ground contacting annular tread portion, a shear band, and a reinforcement layer positioned radially inward of the tread, said reinforcement layer extending radially inward forming sidewalls, wherein said reinforcement layer is formed of a strip of material wound in a geodesic pattern, wherein a portion the reinforcement layer is positioned between the reinforcement layers of the shear band.

Brief Description of the Drawings

The present invention will be better understood through reference to the following description and the appended drawings, in which:

FIG. 1 is a perspective view of a non-pneumatic tire of the present invention;
FIG. 2 is a side view of the non-pneumatic tire of Fig. 1 without the rim and without a protective cover;
FIG. 3 is a cross-sectional view of the non-pneumatic of Figure 1;
FIG. 4 is a perspective view of the non-pneumatic tire showing geodesic ply paths of the reinforcement layer;

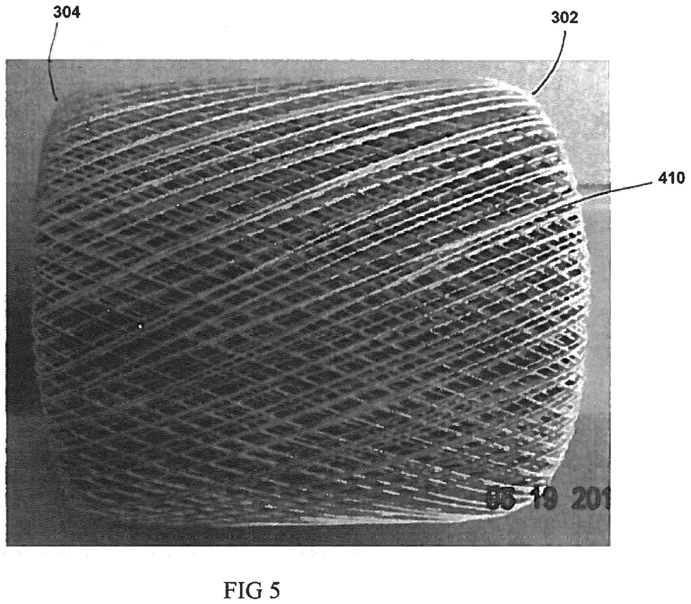

FIG. 5 is a close up top view of crown of the ply without the tread;
FIG. 6 is a cross-sectional view of the non-pneumatic tire showing the ply positioned between the reinforcement layers of the shear band.
FIG. 7 illustrates an alternate embodiment of the ply clamped around an optional elastic member.

Definitions

The following terms are defined as follows for this description.
"Equatorial Plane" means a plane perpendicular to the axis of rotation of the tire passing through the centerline of the tire.
"Meridian Plane" means a plane parallel to the axis of rotation of the tire and extending radially outward from said axis.
"Hysteresis" means the dynamic loss tangent measured at 10 percent dynamic shear strain and at 25°C.

Detailed Description of Example Embodiments of the Invention

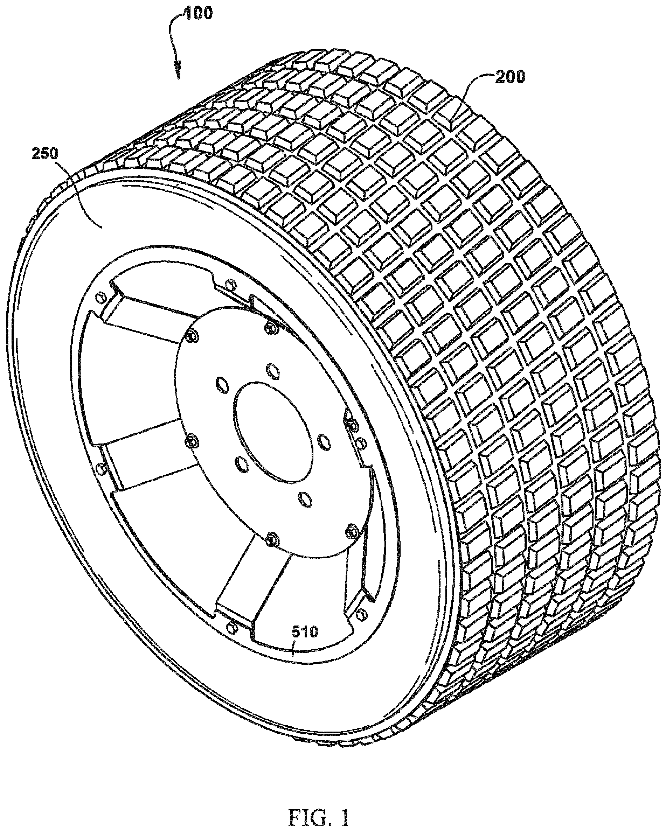

A non-pneumatic tire 100 of the present invention is shown in the enclosed Figures. Figure 1 illustrates the non-pneumatic tire 100 with an optional protective cover 250 over the sidewall. The non-pneumatic tire of the present invention includes a radially outer ground engaging tread 200, a shear band 300, and a reinforcement layer 400. The non-pneumatic tire of the present invention is designed to be a top loaded structure, so that the shear band 300 and the reinforcement layer 400 efficiently carries the load. The shear band 300 and the reinforcement layer 400 are designed so that the stiffness of the shear band is directly related to the spring rate of the tire. The reinforcement layer is designed to be a stiff structure that buckles or deforms in the tire footprint and does not compress or carry a compressive load. This allows the rest of structure not in the footprint area the ability to carry the load, resulting in a very load efficient structure. It is desired to minimize this load for the reason above and to allow the shearband to bend to overcome road obstacles. The approximate load distribution is such that approximately 95-100% of the load is carried by the shear band and the upper radial portion of the reinforcement layer 400, so that the lower portion of the reinforcement structure undergoing compression carries virtually zero of the load, and preferably less than 10%.

The tread portion 200 may be a conventional tread as desired, and may include grooves or a plurality of longitudinally oriented tread grooves forming essentially longitudinal tread ribs there between. Ribs may be further divided transversely or longitudinally to form a tread pattern adapted to the usage requirements of the particular vehicle application. Tread grooves may have any depth consistent with the intended use of the tire. The tire tread 200 may include elements such as ribs, blocks, lugs, grooves, and sipes as desired to improve the performance of the tire in various conditions.

**SHEAR BAND**

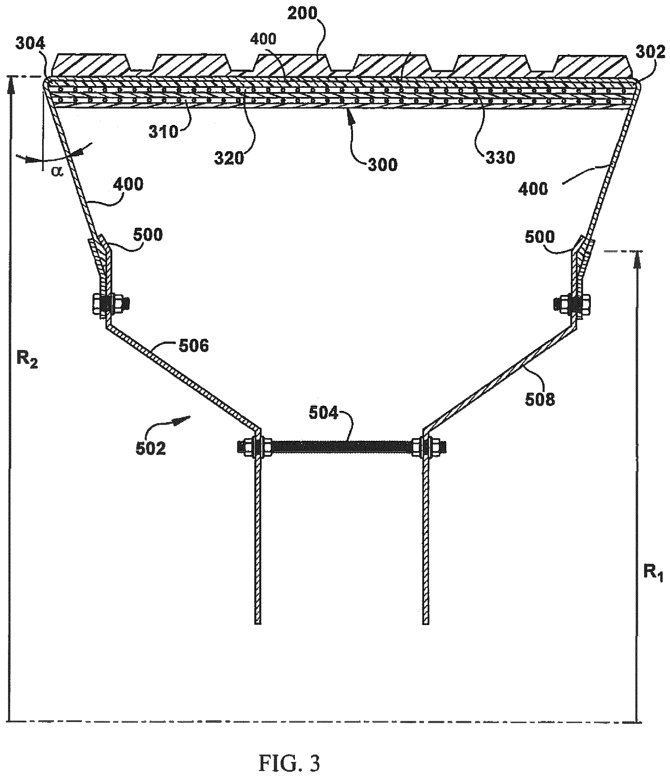

The shear band 300 is preferably annular. A cross-sectional view of the shear band is shown in Figure 3. The shear band 300 is located radially inward of the tire tread 200. The shear band 300 includes a first and second reinforced elastomer layer 310, 320. In a first embodiment of a shear band 300, the shear band is comprised of two inextensible reinforcement layers 310, 320 arranged in parallel, and separated by a shear matrix 330 of elastomer. Each inextensible layer 310, 320 may be formed of parallel inextensible reinforcement cords embedded in an elastomeric coating. The reinforcement cords may be made of steel, aramid, nylon, polyester or of another inextensible structure or material. The shear band 300 may further optionally include a third reinforced elastomer layer located between the first and second reinforced elastomer layers 310, 320.

It is additionally preferred that the outer lateral ends 302, 304 of the shear band be radiused in order to control the buckled shape of the sidewall and to reduce flexural stresses.

In the first reinforced elastomer layer 310, the reinforcement cords are oriented at an angle $\Phi$ in the range of 0 to +/- 10 degrees relative to the tire equatorial plane. In the second reinforced elastomer layer 320, the reinforcement cords are oriented at an angle $\varphi$ in the range of 0 to +/- 10 degrees relative to the tire equatorial plane. Preferably, the angle $\Phi$ of the first layer is in the opposite direction of the angle $\varphi$ of the reinforcement cords in the second layer. That is, an angle $+\Phi$ in the first reinforced elastomeric layer and an angle $-\varphi$ in the second reinforced elastomeric layer.

The shear matrix 330 has a radial thickness in the range of from 2.54 mm to 5.08 mm, more preferably 3.75 mm. The shear matrix is preferably formed of an elastomer material having a shear modulus $G_m$ in the range of from 15 to 80 MPa, and more preferably in the range of from 40 to 60 MPA.

The shear band has a shear stiffness GA. The shear stiffness GA may be determined by measuring the deflection on a representative test specimen taken from the shear band. The upper surface of the test specimen is subjected to a lateral force F as shown below. The test specimen is a representative sample taken from the shear matrix material, having the same radial thickness.

The shear stiffness GA is then calculated from the following equation:

$$GA = F*L/\Delta X$$

The shear band has a bending stiffness EI. The bending stiffness EI is determined from beam mechanics using the three point bending test subjected to a test specimen representative of the shear band. It represents the case of a beam resting on two roller supports and subjected to a concentrated load applied in the middle of the beam. The bending stiffness EI is determined from the following equation: $EI = PL^3/48* \Delta X$, where P is the load, L is the beam length, and $\Delta X$ is the deflection.

It is desirable to maximize the bending stiffness of the shearband EI and minimize the shear band stiffness GA. The acceptable ratio of GA/EI would be between 0.01 and 20, with a preferred range between 0.01 and 5 or 0.1 and 3. EA is the extensible stiffness of the shear band, and it is determined experimentally by applying a tensile force and measuring the change in length. The ratio of the EA to EI of the shearband is acceptable in the range of 0.02 to 100 with a preferred range of 1 to 50 or 3 to 30. The shear band 300 preferably can withstand a maximum shear strain in the range of 15-30%.

The shear band 300 has a spring rate k that may be determined experimentally by exerting a downward force on a horizontal plate at the top of the shear band and measuring the amount of deflection. The spring rate k is determined from the slope of the Force versus deflection curve.

The non-pneumatic tire has an overall spring rate $k_t$ that is determined experimentally. The non-pneumatic tire is mounted upon a rim, and a load is applied to the center of the tire through the rim. The spring rate $k_t$ is determined from the slope of the Force versus deflection curve. The spring rate $k_t$ is preferably in the range of 500 to 1000 for small low speed vehicles such as lawn mowers.

The invention is not limited to the shear band structure disclosed herein, and may comprise any structure which has a GA/EI in the range of 0.01 to 20, or a EA/EI ratio in the range of 0.02 to 100, or a spring rate $k_t$ in the range of 500 to 1000, as well as any combinations thereof. More preferably, the shear band has a GA/EI ratio of 0.01 to 5, or an EA/EI ratio of 1 to 50 and any subcombinations thereof. The tire tread is preferably wrapped about the shear band and is preferably integrally molded to the shear band.

**Geodesic Reinforcement Structure**

The reinforcement structure 400 functions to carry the load transmitted from the shear layer. The reinforcement structure 400 is primarily loaded in tension and shear, and carries no load in compression. As shown in Figure 3, the reinforcement layer 400 has radially inner ends that are clamped to a rim via clamp rings 500 connected to the rim, without the need for a bead. As shown in Figure 3, the reinforcement layer extends radially outward of the shear band 300.

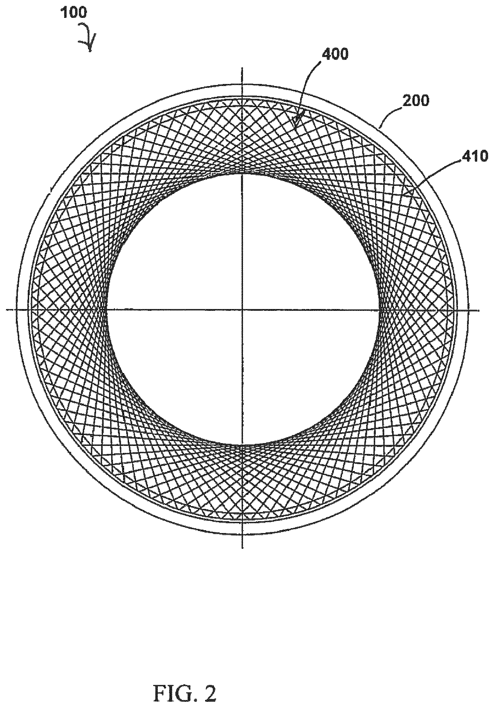

Figure 2 illustrates the reinforcement layer 400 arranged in a geodesic pattern. The reinforcement structure 400 is formed from a strip of material 410 that may be continuously wound in a geodesic pattern. The strip of material may comprise any fabric or flexible structure such as nylon, polyester, cotton, rubber. Preferably, the strip of material comprises a reinforced strip formed of parallel reinforcements that are nylon, polyester or aramid.

A geodesic path on any surface is the shortest distance between two points or the least curvature. On a curved surface such as a torus, a geodesic path is a straight line. A true geodesic ply pattern follows the mathematical equation exactly:

$$\rho \cos \alpha = \rho_0 \cos \alpha_0$$

wherein $\rho$ is the radial distance from the axis of rotation of the core to the cord at a given location; $\alpha$ is the angle of the ply cord at a given location with respect to the mid-circumferential plane; and $\rho_0$ is the radial distance from the axis of rotation of the core to the crown at the circumferential plane, and $\alpha_0$ is the angle of the ply cord with respect to the tread centerline or midcircumferential plane.

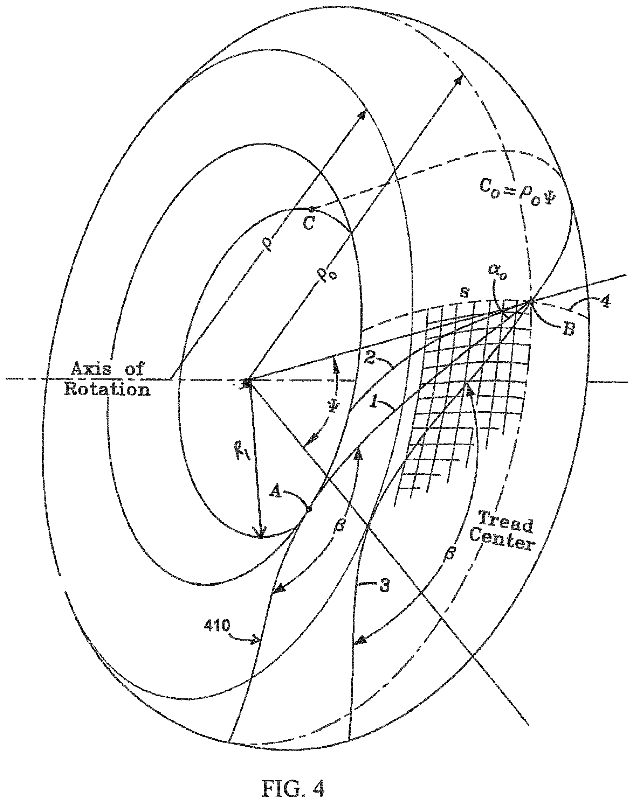

Figure 4 illustrates several different geodesic curves 1-4 of a tire. Curve 1 is a special case of a geodesic curve wherein the cord is tangent to the inner radius defined by radius $R_1$. Curve 1 has an angle $\beta$ about equal to 180 degrees. For curve 1 the following equation applies:

$$\alpha = \cos^{-1} (R_1 / \rho)$$

Figure 2 illustrates a reinforcement layer 400 wherein the strips or reinforcement cords 410 of the reinforcement layer are tangent to the radius $R_1$ of the tire. The reinforcement layer may be built on a mandrel using a computer controlled ply making apparatus, such as shown in US-B-8,845,836. The mandrel may be in the shape of a cylinder such as a tire building drum, but is preferable in the shape of the final tire. A strip of rubber coated reinforcement cords is applied to the mandrel in a geodesic pattern following the mathematical equation $\rho \cos \alpha$ = constant.

The reinforcement layer forming the sidewalls is preferably oriented so that it makes an angle alpha with respect to the radial direction, as shown in Figure 3. The angle alpha can help pretension the reinforcement 400 and also increase and tune the lateral stiffness of the tire. This results in a non-pneumatic tire having angled sidewalls. The angle alpha is measured with respect to the radial direction, and may be +/- 40 degrees, and more preferably, +/- 20 degrees. The angle alpha can be tuned as desired using an axial adjustment feature of the rim 502. The rim 502 may be axially adjusted to narrow or expand the axial rim width. This axial adjustment controls the ply tension, allowing the tire lateral stiffness to be adjusted independent of the radial stiffness. The rim may be adjusted by a tensioning member or bolt 504 that is mounted in the opposed rim parallel walls 506,508. The clamp rings 500 are secured to the outer end of the rim walls 506,508.

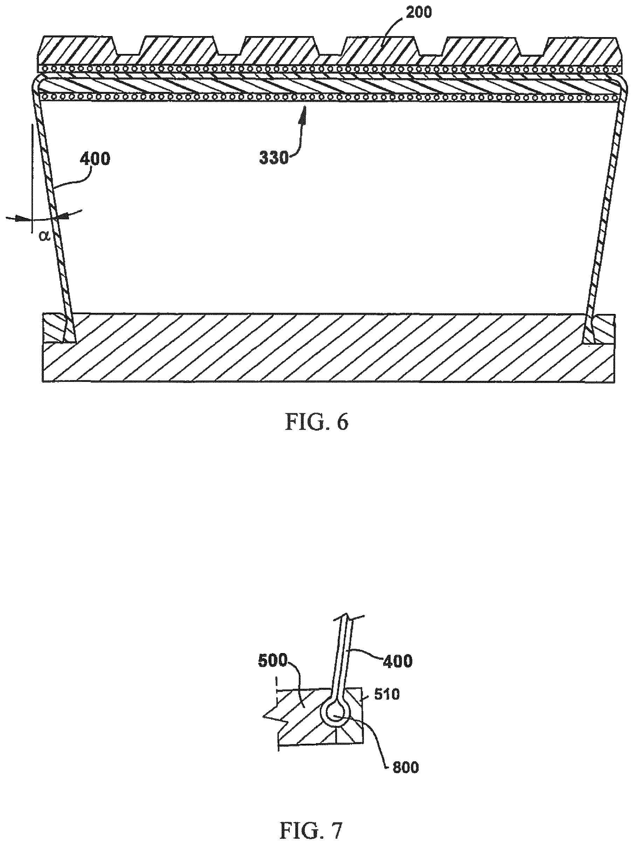

An optional flexible member 800 may be used to form the looped end, as shown in Fig 6, wherein the flexible member 800 and ply ends are then securing to rim clamps 500 as shown in Fig 7. The optional flexible member 800 may be an o-ring or flexible rubber band, which may be included to facilitate the mounting of the reinforcement structure on the rim clamp as shown in Figure 7. Thus the invention has eliminated the need for a bead or annular tensile member, which reduces the weight, cost and complexity of the design.

The reinforcement structure 400 need not be positioned radially outward of the shear band. The reinforcement structure may be positioned radially inward and extending in an axial direction underneath the shear band. Alternatively, a portion of the reinforcement layers of the shear band, as shown in Figure 6. However, it is advantageous to locate the reinforcement layer radially outward of the shear band because it eliminates the tensile stress on the bond between the shear band and load carrying member or connecting structure. This advantage is especially important when the shear band and the play are dissimilar materials.

**Claims**

1. A structurally supported non-pneumatic tire comprising a ground contacting annular tread (200) portion, a shear band (300), a reinforcement layer (400) positioned radially inward of the tread (200), the reinforcement layer (400) extending radially inward forming sidewalls, wherein the reinforcement layer (400) is formed of a strip (410) of material wound in a geodesic pattern.

2. The structurally supported non-pneumatic tire of claim 1 wherein an angle $\beta$ of the strip (410) with respect to itself is strictly greater than 90 degrees.

3. The structurally supported non-pneumatic tire of claim 1 or 2 wherein the strip (410) is continuously wound.

4. The structurally supported non-pneumatic tire of at least one of the previous claims wherein an angle $\beta$ of the strip (410) with respect to itself is substantially 180 degrees throughout the reinforcement layer (400).

5. The structurally supported non-pneumatic tire of at least one of the previous claims wherein the angle $\beta$ of the strip (410) is a constant throughout the reinforcement layer (400).

6. The structurally supported non-pneumatic tire of at least one of the previous claims wherein the angle $\beta$ of the reinforcement layer (400) with respect to itself is 180 degrees or less throughout the reinforcement layer (400).

7. The structurally supported non-pneumatic tire of at least one of the previous claims wherein the strip (410) is tangent to a point located at the radially innermost point of each sidewall.

8. The structurally supported non-pneumatic tire of at least one of the previous claims wherein the non-pneumatic tire has no annular bead.

9. The structurally supported non-pneumatic tire of at least one of the previous claims wherein the non-pneumatic tire (100) is mounted on a rim (502), wherein the rim (502) is axially adjustable.

10. The structurally supported non-pneumatic tire of at least one of the previous claims wherein the reinforcement layer (400) makes an angle alpha with the radial direction of the tire (100) so that the sidewalls are angled.

11. The structurally supported non-pneumatic tire of at least one of the previous claims wherein the angle alpha is in the range of from -20 to +20 degrees.

12. The non-pneumatic tire of at least one of the previous claims wherein a radially inner end of the reinforcement layer (400) is secured to a rim (502).

13. The non-pneumatic tire of at least one of the previous claims wherein the reinforcement layer (400) is positioned radially inward of the shear band (300).

14. The non-pneumatic tire of at least one of the previous claims 1 to 12 wherein the reinforcement layer (400) is positioned radially outward of the shear band (300).

15. The non-pneumatic tire of at least one of the previous claims wherein a portion the reinforcement layer (400) is positioned between reinforcement layers of the shear band (300).

FIG. 1

FIG. 2

FIG. 3

FIG. 4

FIG 5

FIG. 6

FIG. 7

Europäisches
Patentamt

European
Patent Office

Office européen
des brevets

## EUROPEAN SEARCH REPORT

Application Number

EP 16 20 3400

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 856 635 A1 (GERGELE JEAN [FR]) 31 December 2004 (2004-12-31) * page 7, line 25 - page 14, line 35; figures 1-6 * | 1-15 | INV. B60C7/00 B60C7/14 B60C7/26 |
| X | FR 2 844 479 A1 (GERGELE JEAN [FR]) 19 March 2004 (2004-03-19) * page 5, line 21 - page 15, line 15; figures 1-9 * | 1-15 | |
| A | GB 20865 A A.D. 1910 (MECHANISCHE LEINEN JUTE & WOLL [AT]; ERSTES OESTERR STARKSTROM INSP [A) 11 May 1911 (1911-05-11) * page 1, line 21 - page 2, line 12; figures 1-2 * | 1-15 | |
| A | US 2011/146871 A1 (LASKE RICHARD FRANK [US] ET AL) 23 June 2011 (2011-06-23) * paragraphs [0032] - [0064]; figures 1-14 * | 1-15 | |
| A | WO 98/54007 A1 (GOODYEAR TIRE & RUBBER [US]; DYER DALE KENNETH [US]; BRAYER RANDALL RA) 3 December 1998 (1998-12-03) * page 5, line 18 - page 10, line 1; figure 4 * | 1-15 | TECHNICAL FIELDS SEARCHED (IPC) B60C |

The present search report has been drawn up for all claims

| Place of search | Date of completion of the search | Examiner |
|---|---|---|
| Munich | 9 May 2017 | Flori, Massimiliano |

EPO FORM 1503 03.82 (P04C01)

# EP 3 184 326 A1

## ANNEX TO THE EUROPEAN SEARCH REPORT
## ON EUROPEAN PATENT APPLICATION NO.

EP 16 20 3400

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2017

| Patent document cited in search report | | Publication date | Patent family member(s) | | Publication date |
|---|---|---|---|---|---|
| FR 2856635 | A1 | 31-12-2004 | NONE | | |
| FR 2844479 | A1 | 19-03-2004 | NONE | | |
| GB 191020865 | A | 11-05-1911 | NONE | | |
| US 2011146871 | A1 | 23-06-2011 | US 2011146871 | A1 | 23-06-2011 |
| | | | WO 2011079013 | A1 | 30-06-2011 |
| WO 9854007 | A1 | 03-12-1998 | AU 6943398 | A | 30-12-1998 |
| | | | BR 9809695 | A | 11-07-2000 |
| | | | DE 69809227 | D1 | 12-12-2002 |
| | | | DE 69809227 | T2 | 10-07-2003 |
| | | | EP 0984866 | A1 | 15-03-2000 |
| | | | JP 2002500581 | A | 08-01-2002 |
| | | | KR 20010013070 | A | 26-02-2001 |
| | | | WO 9854007 | A1 | 03-12-1998 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8845836 B